(19) Europäisches Patentamt
European Patent Office
Office européen des brevets

(11) Veröffentlichungsnummer: **0 131 097**
**B1**

(12) # EUROPÄISCHE PATENTSCHRIFT

(45) Veröffentlichungstag der Patentschrift: **29.08.90**

(51) Int. Cl.[5]: **C 08 K 9/10**, C 08 L 75/04, C 08 K 3/32, C 01 B 25/40, D 21 H 17/10

(21) Anmeldenummer: **84104491.0**

(22) Anmeldetag: **19.04.84**

(30) **Dem Antrag nach Regel 88 EPU zur Aufnahme der fehlenden Seite 2 in die ursprünglich eingereichte Beschreibung vom 19.04.84 wurde stattgegeben.**

(54) **Verfahren zur Herstellung von hydrolysestabilen pulverförmigen Ammoniumpolyphosphaten.**

(30) Priorität: **07.05.83 DE 3316880**

(43) Veröffentlichungstag der Anmeldung:
**16.01.85 Patentblatt 85/03**

(45) Bekanntmachung des Hinweises auf die Patenterteilung:
**29.08.90 Patentblatt 90/35**

(84) Benannte Vertragsstaaten:
**AT BE CH DE FR GB IT LI NL SE**

(56) Entgegenhaltungen:
**EP-A-0 033 361**
**EP-A-0 035 094**
**EP-A-0 093 993**
**US-A-3 423 343**
**US-A-4 097 400**

(73) Patentinhaber: **HOECHST AKTIENGESELLSCHAFT**
**Postfach 80 03 20**
**D-6230 Frankfurt am Main 80 (DE)**

(72) Erfinder: **Elsner, Georg, Dr.**
**Dr.-Krauss-Strasse 5**
**D-5030 Hürth (DE)**
Erfinder: **Staendeke, Horst, Dr.**
**Alte Honrather Strasse 22**
**D-5204 Lohmar (DE)**
Erfinder: **Heymer, Gero, Dr.**
**Fasanenaue 12**
**D-5042 Erftstadt (DE)**

**EP 0 131 097 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung von hydrolysestabilen pulverförmigen Ammoniumpolyphosphaten, im folgenden APP genannt, durch Mikroverkapselung der APP-Teilchen mit einem wärmehärtbaren, im gehärteten Zustand wasserunlöslichen Kunstharz.

Es ist aus der DE—OS 29 49 537 (EP—A 0033316) ein teilchenförmiges Mittel auf der Basis von freifließendem, pulverförmigen Ammoniumpolyphosphaten der allgemeinen Formel

$$H_{(n-m)+2}(NH_4)_mP_nO_{3n+1}$$

in welcher n eine ganze Zahl mit einem Durchschnittswert von 20 bis 800 bedeutet und das Verhältnis von m zu n etwa 1 beträgt, zur Verhinderung der Brennbarkeit von brennbaren Stoffen bekannt, welches dadurch gekennzeichnet ist, daß es aus

a) 75 bis 99 Gew% Ammoniumpolyphosphat und

b) 1 bis 25 Gew% eines gehärteten, wasserunlöslichen Polykondensationsproduktes aus Melamin und Formaldehyd, welches die einzelnen Ammoniumpolyphosphatteilchen umhüllt, besteht.

Das Aufbringen des Melamin/Formaldehyd-Harzes auf die Ammoniumpolyphosphat-Teilchen erfolgt hierbei beispielsweise derart, daß man zunächst das Ammoniumpolyphosphat in Methanol suspendiert, die Suspension die zu einem schwachen Rückfluß des Methanols erhitzt und anschließend in die Suspension eine methanolisch/wäßrige Lösung des Melamin/Formaldehyd-Harzes eintropft. Nach Ablauf einer Nachreaktionszeit von beispielsweise 0,5 bis 2 Stunden wird die Suspension filtriert und der Filterrückstand im Stickstoffstrom bei 100°C während 150 bis 180 Minuten getrocknet. Während der Trocknung erfolgt gleichzeitig die Aushärtung des auf die Ammoniumpolyphosphat-Teilchen aufgebrachten Harzüberzuges.

Wie aus der DE—OS 30 05 252 (EP—A 0035094) hervorgeht, kann die Hydrolysebeständigkeit von pulverförmigen Ammoniumpolyphosphaten in Anlehnung an den Gegenstand der DE—OS 29 49 537 auch dadurch verbessert werden, daß man die APP-Teilchen mit einem gehärteten, wasserunlöslichen Phenolharzüberzug versieht. Das Aufbringen der Phenolharze auf die Ammoniumpolyphosphat-Teilchen kann entweder in einer alkoholischen Harzlösung durch Aushärten des Harzes unter Rühren der Ammoniumpolyphosphat/Harz-Suspension oder durch Verdampfen des Lösungsmittels der Suspension in einem beheizten Kneter mit nachfolgender Hitzehärtung oder durch Sprühtrocknung der Suspension erfolgen.

Durch die Umhüllung der Ammoniumpolyphosphat-Teilchen mit einem gehärteten Phenolharz bzw. Phenol/Formaldehyd-Harz wird die Löslichkeit des Ammoniumpolyphosphates in Wasser erheblich herabgesetzt, was sich günstig auswirkt beim Einsatz eines derartig vorbehandelten Ammoniumpolyphosphates als Flammschutzmittel in Polyurethanschäumen.

Die Hydrolysestabilität der vorbeschriebenen, bekannten Produkte ist ein Maß für das Verhalten des beschichteten APP bei kurzer Einwirkung von Wasser bei 25°C, entsprechend der jeweils angewandten Testmethode.

Es wurde nunmehr festgestellt, daß die Hydrolysestabilität obiger Produkte bei höheren Temperaturen, beispielsweise bei 60°C, wie sie bei einigen Einsatzbereichen des Ammoniumpolyphosphates erreicht werden, abnimmt, d.h. daß der lösliche Anteil des APP in Wasser bis zum Zehnfachen höher ist als der bei 25°C ermittelte Anteil. Es bestand somit das dringende Bedürfnis diesem Mangel abzuhelfen und ein beschichtetes Ammoniumpolyphosphat herzustellen, das auch bei erhöhten Temperaturen in Gegenwart von Wasser hydrolysestabil ist, wobei der auf die APP-Teilchen aufgebrachte Überzug möglichst vollständig und die Korngrößenverteilung des hergestellten Produktes weitgehend dem des unbeschichteten APP entsprechen soll.

Abgesehen von dem genannten Mangel der bekannten Produkte sind die zur Herstellung dieser Produkte offenbarten Arbeitsweisen ebenfalls nicht voll befriedigend.

So werden bei der Herstellung des beschichteten APP in einem Kneter die Wände und Werkzeuge des Kneters mit Belägen verunreinigt, die nur noch mechanisch entfernt werden können. Außerdem werden bei der Entfernung des Lösungsmittels aus dem APP/Harz-Gemisch mit Hilfe eines Gasstroms feinkörnige Anteile des Gemisches vom Gasstrom mitgerissen und müssen aus letzterem wieder abgeschieden werden.

Schließlich läßt es sich bei der Arbeitsweise im Kneter nicht vermeiden, daß einzelne Körner zusammenbacken und dadurch das Kornspektrum des behandelten APP unvorteilhaft verändert wird. Unterwirft man die durch Verbackung agglomerierten Teile des APP einer nachträglichen Mahlung, so werden Bruchflächen im Mahlgut erzeugt, die Angriffspunkte für die Hydrolyse des APP im Kontakt mit Wasser ermöglichen.

Gegenstand der Erfindung ist nunmehr ein Verfahren zur Herstellung eines hydrolysestabilen, teilchenförmigen Mittels auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von 20 bis 800 bedeutet und das Verhältnis von m zu n etwa 1 beträgt, durch Behandlung des Ammoniumpolyphosphates in Gegenwart eines

Verdünnungsmittels und unter Rühren mit einem wärmehärtbaren und in gehärtetem Zustand wasserrunlöslichen Kunstharz, Abtrennen des Verdünnungsmittels und Trocknen des Ammoniumpolyphosphates bei einer die Aushärtung des Kunstharzes bewirkenden Temperatur, welches dadurch gekennzeichnet ist, daß man das Ammoniumpolyphosphat, einen aliphatischen Alkohol mit 1—4 C-Atomen als Verdünnungsmittel sowie ein Melamin/Formaldehyd-Harz oder Phenol/Formaldehyd-Harz, gegebenenfalls in einem Lösungsmittel gelöst in beliebiger Reihenfolge in einem Druckgefäß vorlegt und bei Raumtemperatur innig vermischt; daß man das Gemisch auf eine Temperatur von 80° bis 180°C in dem verschlossenen Druckgefäß erhitzt und zur Aushärtung der Harzkomponente bei dieser Temperatur und dem dem Dampfdruck des Verdünnungsmittels entsprechenden Druck während 15 bis 240 Minuten beläßt; und daß man das Gemisch auf Raumtemperatur abkühlt, das Verdünnungsmittel abtrennt und das erhaltene Produkt trocknet.

Eine bevorzugte Ausführungsform des Verfahrens der Erfindung besteht darin, daß man das Ammoniumpolyphosphat, das Verdünnungsmittel sowie die Harzkomponente im Gewichtsverhältnis von 1 zu 1,5 zu 0,1 einsetzt.

Als Harzkomponente haben sich zum einen Melamin/Formaldehyd-Harz bewährt, die im ungehärteten Zustand Pulver darstellen, deren 50%ige wäßrige Lösungen eine dynamische Viskosität von 20—50 mPa.s (bei 20°C), einen pH-Wert von 8,8—9,8 (bei 20°C) und eine Dichte von 1,21—1,225 g/ml (bei 20°C) besitzen, und zum anderen ein alkohollösliches, härtbares, nicht-plastifiziertes Phenolharz (Phenol/Formaldehyd-Harz) oder ein wärmehärtbares Phenolresol.

Es hat sich weiterhin als vorteilhaft erwiesen, beim Erhitzen des Gemisches die Temperatur auf 110°—130°C und die Dauer der Aushärtungszeit auf 30 bis 60 Minuten zu beschränken.

Die erfindungsgemäße Verfahrensweise wirkt sich in verschiedener Hinsicht auf die Produktqualität positiv aus. So tritt beim Beschichtungsprozess keine nennenswerte Veränderung des Kornsprektrums des Produktes im Vergleich zum Kornspektrum des eingesetzten Ammoniumpolyphosphates auf. Eventuell beim Beschichtungsprozess entstandene Agglomerate können durch geringe mechanische Einwirkung zerkleinert werden, ohne daß unerwünschte Bruchflächen an den Agglomerat-Teilchen entstehen. So wurde festgestellt, daß durch Mahlung nachbehandelte Produkte, deren Korngrößenverteilung mit der des eingesetzten APP identisch ist, sich hinsichtlich ihres Gehaltes an wasserlöslichen Anteilen so verhalten, als wären sie dem Mahlprozess nicht unterworfen worden. Das fertige Mittel besitzt im allgemeinen eine mittlere Teilchengröße von 0,01—0,05 mm.

Ein weiterer Vorzug der erfindungsgemäßen Arbeitsweise besteht darin, daß die Qualität des beschichteten APP nicht von der Reihenfolge der Zugabe der einzelnen Komponenten in das Reaktionsgefäß abhängt. Man kann also beispielsweise so verfahren, daß man Alkohol und APP in einem Rührbehälter vorlegt, das Harz zufügt und unter Rühren und Erhitzen die Beschichtung bewirkt. Mann kann aber auch eine Lösung des Harzes in Wasser zu dem Alkohol im Rührkessel geben und erst dann das APP zufügen. Besonders bevorzugt ist eine Arbeitsweise, bei der Harz, APP und beispielsweise wasserfreies Methanol in einem Rührkessel vermischt werden, wonach die Beschichtung und Aushärtung des Überzugs durch Erhitzen erfolgt. Diese Arbeitsweise gestattet die mehrfache Verwendung des eingesetzten und bei der Filtration wiedergewonnenen Methanols ohne energieaufwendige Destillation, welche auch insbesondere dadurch erschwert wird, daß gewisse lösliche Anteile des Harzes die Wärmetauscherflächen einer Destillationsanlage belegen und so eine aufwendige periodische Reinigung der Destillationsapparatur notwendig machen.

Das nach dem Verfahren der Erfindung hergestellte Produkt ist zum Flammfestmachen von Polyurethanen bzw. Polyurethanschäumen geeignet, wobei der Gehalt des Flammschutzmittels im Polyurethanschaum 5 bis 50 Gew%, bezogen auf die Menge der Polyolkomponente des Polyurethans beträgt. Eine andere Anwendungsform des erfindungsgemäßen Produktes ist der Einsatz zum Flammfestmachen von zellulosehaltigem Material, wie Papiersorten, Pappen, Kartons und dergleichen sowie Wellpappen als Sekundärprodukte, wobei die Flammschutzmittelmenge 5—30 Gew%, bezogen auf trockenen Faserstoff beträgt.

Das erfindungsgemäße Verfahren sowie die Eigenschaften der jeweiligen Verfahrensprodukte werden in den nachfolgenden Beispielen näher erläutert. Zur Durchführung des Verfahrens wurden im Handel erhältliche Ausgangsproudukte eingesetzt. Im Einzelnen handelt es sich hierbei um folgende Produkte:

1. ®Exolit 422, Hoechst AG, Frankfurt/Main
   Es handelt sich um ein feinkörniges, in Wasser schwer lösliches Ammoniumpolyphosphat der Formel $(NH_4PO_3)_n$, wobei n ~700 ist. Die Teilchengröße des APP beträgt >99% <45µ.
2. ®Madurit MW 330, Cassella Aktiengesellschaft, Frankfurt/Main.
3. ®Madurit MW 390, Cassella Aktiengesellschaft, Frankfurt/Main.
4. ®Kauramin-Tränkharz 700 Pulver, BASF AG, Ludwigshafen.

Die unter 2.—4. aufgeführten Melamin/Formaldehyd-Harze sind im ungehärteten Zustand Pulver, deren 50%ige wäßrige Lösungen eine dynamische Viskosität von 20—50 mPa.s (bei 20°C), einen pH-Wert von 8,8—9,8 (bei 20°C) und eine Dichte von 1,21—1,225 g/ml (bei 20°C) besitzen.

Die erfindungsgemäße Arbeitsweise wird durch die folgenden Beispiele näher erläutert.

Beispiel 1

Es wurden in einem 300-l-Rührbehälter 200 l Methanol, 100 kg APP sowie 10 kg Melaminharz bei

Raumtemperatur zu einer Suspension verrührt. Der Rührbehälter wurde sodann verschlossen und der Inhalt auf 120°C erhitzt. Dabei stellte sich im Behälter ein Druck von ca. 6 bar ein. Der Reaktorinhalt wurde eine Stunde bei dieser Temperatur belassen, anschließend abgekühlt und auf eine Saugnutsche abgelassen. Das Methanol wurde abgesaugt und zur Wiederverwendung gesammelt. Das beschichtete APP wurde durch Hindurchsaugen von erwärmtem Stickstoff getrocknet. Das trockene Produkt hatte ein Gewicht von 108 kg. Die sonstigen Eigenschaften des Produktes sind der Tabelle 1 zu entnehmen.

Beispiel 2

100 kg APP wurden in 200 l Methanol im Rührkessel aufgeschlämmt. Dann wurde ein Lösung von 10 kg Melaminharz in 10 kg warmem Wasser (40°C) zugefügt. Der Rührkessel wurde verschlossen, die Temperatur auf 120°C gesteigert und die Temperatur eine Stunde gehalten. Die weiteren Maßnahmen erfolgten analog Beispiel 1.

Die Ausbeute an Verfahrensprodukt betrug 109 kg. Die Eigenschaften des Produktes sind aus Tabelle I ersichtlich.

Beispiel 3

100 kg APP wurden in einer Wasser-Methanol-Mischung, bestehend aus 36 l Wasser und 164 l Methanol, in einen Rührkessel aufgeschlämmt. Dann wurden 10 kg festes Melaminharz zugefügt. Die weitere Verfahrensweise ist analog Beispiel 1.

Ausbeute: 108 kg.

Eigenschaften des Verfahrensproduktes: siehe Tabelle I.

Beispiel 4

Das nach Beispiel 2 erhaltene Produkt wurde auf einer Pallmann-Mühle vermahlen. Die Eigenschaften des gemahlenen Produkts sind in Tabelle I erläutert.

Beispiele 5—10

Es wurde jeweils analog Beispiel 1 verfahren, wobei in Beispiel 5 die eingesetzten Stoffmengen denen des Beispiels 1 entsprachen. Ab Beispiel 6 wurde das gemäß Beispiel 5 zurückgewonnene Methanol wiederverwendet, wobei die durch Trocknung des Produktes eingetretenen Methanolverluste (ca. 30 l) durch frisches Methanol ergänzt wurden. Die Menge des eingesetzten Harzes wurde auf 8 kg vermindert. Nach jedem Ansatz wurden Wassergehalt und Feststoffgehalt des Methanols untersucht. Die erhaltenen Werte sind in Tabelle II dargestellt. Die Eigenschaften des beschichteten Produkts gemäß den Beispielen 5—10 sind aus Tabelle III ersichtlich.

Tabelle I

| Beispiel | Produkteigenschaften | | |
|---|---|---|---|
| | Korngröße | Lösl. Anteile in $H_2O$ bei 25°C | Lösl. Anteile in $H_2O$ bei 60°C |
| 1 | 96 % <75 µ | 0,9 Gew% | 1,8 Gew% |
| 2 | 98 % <75 µ | 0,5 Gew% | 2,0 Gew% |
| 3 | 99 % <75 µ | 1,0 Gew% | 2,1 Gew% |
| 4 | 99 % <45 µ | 0,7 Gew% | 1,8 Gew% |

Tabelle II

| Beispiel | Wassergehalt des Methanols | Feststoffgehalt des Methanols |
|---|---|---|
| 5 | 2,2 Gew% | 2,4 Gew% |
| 6 | 4,5 Gew% | 2,6 Gew% |
| 7 | 6,6 Gew% | 2,1 Gew% |
| 8 | 9,0 Gew% | 2,8 Gew% |
| 9 | 11,2 Gew% | 2,5 Gew% |
| 10 | 13,0 Gew% | 2,9 Gew% |

Tabelle III

| Beispiel | Produkteigenschaften | | |
|---|---|---|---|
| | Korngröße | Lösl. Anteile in $H_2O$ bei 25°C | Lösl. Anteile in $H_2O$ bei 60°C |
| 5 | 99 % <150 μ | 0,3 Gew% | 1,8 Gew% |
| 6 | 99 % <150 μ | 0,35 Gew% | 1,9 Gew% |
| 7 | 96 % <150 μ | 0,32 Gew% | 1,4 Gew% |
| 8 | 98 % <150 μ | 0,7 Gew% | 3,2 Gew% |
| 9 | 97 % <150 μ | 0,7 Gew% | 2,4 Gew% |
| 10 | 99 % <150 μ | 0,6 Gew% | 2,3 Gew% |

**Patentansprüche**

1. Verfahren zur Herstellung eines hydrolysestabilen, teilchenförmigen Mittels auf der Basis von freifließendem, pulverförmigem Ammoniumpolyphosphat der allgemeinen Formel

$$H_{(n-m)+2}(NH_4)_mP_nO_{3n+1}$$

in welcher n eine ganze Zahl mit einem Durchschnittswert von 20 bis 800 bedeutet und das Verhältnis von m zu n etwa 1 beträgt, durch Behandlung des Ammoniumpolyphosphates in Gegenwart eines Verdünnungsmittels und unter Rühren mit einem wärmehärtbaren und in gehärtetem Zustand wasserunlöslichen Kunstharz, Abtrennen des Verdünnungsmittels und Trocken des Ammoniumpolyphosphates bei einer die Aushärtung des Kunstharzes bewirkenden Temperatur, dadurch gekennzeichnet, daß man das Ammoniumpolyphosphat, einen aliphatischen Alkohol mit 1—4 C-Atomen also Verdünnungsmittel sowie ein Melamin/Formaldehyd-Harz oder Phenol/Formaldehyd-Harz, gegebenenfalls in einem Lösungsmittel gelöst, in beliebiger Reihenfolge in einem Druckgefäß vorlegt und bei Raumtemperatur innig vermischt; daß man das Gemisch auf eine Temperatur von 80° bis 180°C in dem Verschlossenem Druckgefäß erhitzt und zur Aushärtung der Harzkomponente bei dieser Temperatur und dem dem Dampfdruck des Verdünnungsmittels entsprechenden Druck während 15 bis 240 Minuten beläßt, und daß man das Gemisch auf Raumtemperatur abkühlt, das Verdünnungsmittel abtrennt und das erhaltene Produkt trocknet.

2. Verfahren nach Anspruch 1, dadurch gekennzeichnet, daß man das Ammoniumpolyphosphat, das Verdünnungsmittel sowie die Harzkomponente im Gewichtsverhältnis von 1 zu 1,5 zu 0,1 einsetzt.

3. Verfahren nach Anspruch 1 oder 2, dadurch gekennzeichnet, daß das Melamin/Formaldehyd-Harz im ungehärteten Zustand ein Pulver darstellt, dessen 50%ige wässerige Lösung eine dynamische Viskosität

von 20 mPa.s, einen pH-Wert bei 20°C von 8,8 bis 9,8 und eine Dichte bei 20°C von 1,21 bis 1,225 (g/ml) besitzt.

4. Verfahren nach Anspruch 1 oder 2, dadurch gekennzeichnet, daß das Phenolharz ein alkohollösliches, härtbares, nichtplastifiziertes Phenolharz (Phenol/Formaldehyd-Harz) oder ein wärmehärtbares Phenolharz ist.

5. Verfahren nach Anspruch 1—4, dadurch gekennzeichnet, daß man das Gemisch auf eine Temperatur von 110°C—130°C erhitzt.

6. Verfahren nach Anspruch 1—5, dadurch gekennzeichnet, daß die Aushartungszeit 30 bis 60 Minuten beträgt.

7. Verwendung des nach dem Verfahren gemäß Ansprüchen 1—6 hergestellten Mittels zum Flammfestmachen von Polyurethanen bzw. Polyurethanschäumen, wobei der Gehalt des Mittels im Polyurethanschaum 5 bis 50 Gew%, bezogen auf die Menge der Polyolkomponente des Polyurethans, beträgt.

8. Verwendung des nach dem Verfahren gemäß Ansprüchen 1—6 hergestellten Mittels zum Flammfestmachen von zellulosehaltigem Material wie Papiersorten, Pappen, Kartons und dergleichen sowie Wellpappen, in Mengen von 5—30 Gew%, bezogen auf trockenen Faserstoff.

**Revendications**

1. Procédé pour la fabrication d'un agent en particules stable à l'hydrolyse à base de polyphosphate d'ammonium en poudre à écoulement libre, de formule générale

$$H_{(n-m)+2}(NH_4)_mP_nO_{3n+1}$$

dans laquelle n représente un nombre entier d'un valeur moyenne de 20 à 800 et le rapport de m à n est d'environ 1, par traitement du polyphosphate d'ammonium en présence d'un agent diluant et en l'agitant avec une résine synthétique thermodurcissable et insoluble dans l'eau à l'état durci, séparation de l'agent diluant et séchage du polyphosphate d'ammonium à une température provoquant le durcissement de la résine synthétique, caractérisé en ce que l'on charge dans un récipient à pression, dans un ordre quelconque, et on mélange intimement à la température ambiante le polyphosphate d'ammonium, un alcool aliphatique en $C_1$—$C_4$ comme diluant et une résine mélamine/formaldéhyde ou une résine phénol/formaldéhyde, éventuellement dissoute dans un solvant; en ce que l'on chauffe le mélange dans un récipient à pression fermé à une température de 80 à 180°C et on l'abandonne à cette température et sous la pression correspondant à la tension de vapeur du diluant pendant 15 à 240 minutes pour le durcissement du composant de résine; et en ce qu'on refroidit le mélange à la température ambiante, on sépare le diluant et on sèche le produit obtenu.

2. Procédé selon la revendication 1, caractérisé en ce que l'on utilise le polyphosphate d'ammonium, le diluant et le composant de résine dans les proportions pondérales de 1 : 1,5 : 0,1.

3. Procédé selon la revendication 1 ou 2, caractérisé en ce que la résine mélamine/formaldéhyde est, à l'état non durci, une poudre dont la solution aqueuse à 50% a une viscosité dynamique de 20—50 mPa.s, un pH à 20°C de 8,8 à 9,8 et une densité à 20°C de 1,21 à 1,225 g/ml.

4. Procédé selon la revendication 1 ou 2, caractérisé en ce que la résine phénolique est une résine phénolique soluble dans l'alcool, durcissable, non plastifiée (résine phénol/formaldéhyde) ou une résine phénolique thermodurcissable.

5. Procédé selon les revendications 1 à 4, caractérisé en ce que l'on chauffe le mélange à une température de 110—130°C.

6. Procédé selon les revendications 1 à 5, caractérisé en ce que la durée de durcissement est de 30 à 60 minutes.

7. Utilisation de l'agent fabriqué par le procédé selon les revendications 1 à 6 pour l'ignifugation de polyuréthannes ou de mousses de polyuréthanne, la teneur en l'agent dans la mousse de polyuréthanne étant de 5 à 50% en poids, par rapport à la quantité du composé polyol du polyuréthanne.

8. Utilisation de l'agent fabriqué par le procédé selon les revendications 1 à 6 pour l'ignifugation de matière cellulosique telle que les types de papier, des cartons et analogues et des cartons ondulés, en quantités de 5 à 30% en poids par rapport à la matière fibreuse sèche.

**Claims**

1. A process for the preparation of a particulate material which is stable to hydrolysis and is based on free-flowing, pulverulent ammonium polyphosphate of the general formula

$$H_{(n-m)+2}(NH_4)_mP_nO_{3n+1}$$

in which n is an integer having an average value of 20 to 800 and the ratio of m to n is about 1, by treatment of the ammonium polyphosphate, in the presence of a diluent and with stirring, with a synthetic resin which is heat-curable and in the cured state is insoluble in water, separating off the diluent and drying the

ammonium polyphosphate at a temperature causing the curing of the synthetic resin, wherein the ammonium polyphosphate, an aliphatic alcohol having 1 to 4 carbon atoms, as diluent, and a melamine/formaldehyde resin or phenol/formaldehyde resin, optionally dissolved in a solvent, are initially introduced into a pressure vessel in any sequence and intimately mixed at room temperature; wherein the mixture is heated to a temperature of 80°C to 180°C in a closed pressure vessel and left at this temperature and the pressure coresponding to the vapor pressure of the diluent for 15 to 240 minutes in order to cure the resin component; and wherein the mixture is cooled to room temperature, the diluent is separated off and the product obtained is dried.

2. The process as claimed in claim 1, wherein the ammonium polyphosphate, the diluent and the resin component are employed in a weight ratio of 1 to 1.5 to 0.1.

3. The process as claimed in claim 1 or 2, wherein the melamine/formaldehyde resin is a powder in the uncured state, whose 50% strength aqueous solution has a dynamic viscosity of 20—50 mPa.s, a pH at 20°C of 8.8 to 9.8 and a density at 20°C of 1.21 to 1.225 (g/ml).

4. The process as claimed in claim 1 or 2, wherein the phenolic resin is an alcohol-soluble, curable, non-plasticised phenolic resin (phenol/formaldehyde resin) or a heat-curable phenolic resin.

5. The process as claimed in any one of claims 1—4, wherein the mixture is heated to a temperature of 110°—130°C.

6. The process as claimed in any one of claims 1—5, wherein the curing time is 30 to 60 minutes.

7. The use of the material prepared according to the process of any one of claims 1 to 6 for the fireproofing of polyurethanes or polyurethane foams, the content of the material in the polyurethane foam being 5 to 50% by weight, relative to the amount of the polyol component of the polyurethane.

8. The use of the material prepared according to the process of any one of claims 1 to 6 for the fireproofing of cellulose-containing material such as types of paper, cardboards, card and the like and also corrugated cardboards, in amounts of 5 to 30% by weight, relative to the dry fiber material.